# EUROPEAN PATENT SPECIFICATION

(11) **EP 1 702 257 B1**
(45) Date of publication and mention of the grant of the patent: **29.03.2017**
(21) Application number: 04797692.3
(22) Date of filing: 06.11.2004
(51) Int. Cl.: G06F 3/033

(54) **DEVICE FOR PLAYBACK OF MULTIMEDIA FILES**
GERÄT ZUR WIEDERGABE VON AUDIODATEIEN
DISPOSITIF DE REPRODUCTION DE FICHIERS AUDIO

(30) Priority: 05.01.2004 EP 04290020
(43) Date of publication of application: 20.09.2006
(73) Proprietor: Thomson Licensing, 92130 Issy-les-Moulineaux (FR)
(72) Inventor: AU, Matthew, Flat F, 14/F Belleve Court, Shatin, N.T., Hong Kong (CN); CHAN, Sai, Fan, Flat B, 7/F Ocean Mansion, Kowloon, Hong Kong (CN); LIE, Kin, Pou, Unit C, Floor 17 Tower 9, Bellagio, Sham Tseng, N.T., Hong Kong (CN)
(86) International application number: PCT/EP2004/012595
(87) International publication number: WO 2005/069099

(56) References cited:
- WO-A-03/023781
- US-A1- 2002 109 709
- "Discotheque Sound System DJ User's Manual"[Online] 2003, XP002311032 Retrieved from the Internet: URL:http://www.myxoft.com/manual.pdf> [retrieved on 2004-11-21]
- "XBOX Media Player 2.4"[Online] 2002, XP002311034 Retrieved from the Internet: URL:http://mesh.dl.sourceforge.net/sourcef orge/xbplayer/xbmp2.4manual.english.pdf> [retrieved on 2004-11-21]

## Description

The present invention relates to a user interface for a device for playback of multimedia files having means for navigating within a plurality of multimedia files and/or means for changing a playback order, and to a method for navigating within a plurality of multimedia files and/or for changing a playback order. Furthermore, the invention relates to a device for playback of multimedia files using such user interface or method.

Today a plurality of multimedia devices for storage and playback of multimedia files are available. An example are devices capable of playback of compressed audio files, such as files in mp3, mp3Pro or WMA format. Of course, a variety of other compression formats exist. A further example are portable video players, which allow playback of movies or short video clips as well as the presentation of photos by means of a slideshow. Also electronic books, which are used for displaying text files, are multimedia devices in this context. A lot of further types of multimedia devices are likely to be developed. The multimedia files are generally stored on optical disks such as CD-R, CD-R(W), DVD or DVD±R(W), on storage cards (e.g. SD-card, CompactFlash-card, etc), or even on hard disks. Some multimedia devices are connected via a cable or wirelessly to a personal computer (PC) for accessing multimedia files stored on the PC. Other multimedia devices receive multimedia files via an external network, e.g. via the internet. Due to the compression and the large available storage capacities these multimedia devices store or access up to several thousands of multimedia files. Of course, most multimedia devices are also capable of playing back uncompressed multimedia files.

The navigation within these multimedia files, i.e. within the corresponding multimedia file libraries, is quite cumbersome, especially for multimedia devices having only a limited or even no space available for displaying information to the user. This is, for example, the case for most portable audio and video devices such as mp3-players or video-players, but also for many micro systems or slim-case multimedia devices. Different types of navigation menu modes are known. According to these modes the user navigates within the multimedia files by track numbers or file names, he arranges the multimedia files in folders and browses the folders, or he uses advanced navigation modes, which allow to sort the multimedia files by certain features like genre, album or artist. In the latter navigation menu mode, the user chooses the sorting order in a higher level menu and then enters the file directory. If the user decides to change the sorting order, he has to go back into the high level menu to choose the new sorting order.

It is an object of the invention to propose an improved user interface for a multimedia device.

According to the invention, this object is achieved by a user interface for a device for playback of multimedia files, including means for changing the sorting order and/or the playback order of the plurality of multimedia files; whereby upon changing the sorting order and/or the playback order of the multimedia files the currently selected multimedia file is kept and the new sorting order and/or the playback order is determined by at least one property of the currently selected multimedia file, wherein the means for changing the sorting order and/or the playback order include a button for changing the order by running through a predefined sequence of properties of the currently selected multimedia file.
In this way only a single button is needed for either changing the sorting order or the playback order, which is preferable for a device having only limited space available for the user interface, e.g. a portable device. In case both possibilities are provided, either a dedicated button is provided for each function or a single button is provided for both functions.

Since both functions are on the one hand quite similar, but on the other hand not used at the same time, the provision of a single button does not lead to any operating conflicts. The changing of the sorting order in accordance with the currently selected multimedia file, e.g. the multimedia file chosen in a menu, allows a fast access to further multimedia files having a specific property. If the user has found an multimedia file by, for example, a specific artist, by simply activating the means for changing the sorting order a number of times he can find other multimedia files by the same artist, other multimedia files from the same album (for example in the case of audio files or photos), other multimedia files from the same year, etc. There is no need to go back to the high-level menu to change the sorting order, which would mean that the user had to search for the previously selected multimedia file again. Navigation is, therefore, more convenient.

Similarly, changing of the playback order is very convenient during playback of the multimedia files. If during playback the user decides that he wants to play back more multimedia files having the same property as the currently selected, i.e. played back multimedia file, e.g. the same artist, the same author or the same subject, he simply activates the means for changing the playback order. The playback order is then changed and more multimedia files having the desired property are played back.

While changing of the sorting order is especially advantageous if the multimedia device includes a display for displaying information about the multimedia files, changing of the playback order is also desirable for a device for playback of multimedia files having only a limited display without the capability of displaying variable text, or even no display or no means for a feedback of the playback order at all. In this case no advanced navigation as described above is necessary, since the available information cannot be displayed. However, the changing of the playback order is still conveniently achieved.

Advantageously, the user interface further includes means for giving a feedback of the sorting order and/or the playback order. In this way the user is informed about the current sorting order and/or the playback order. Each change of the sorting order and/or the playback order is instantly indicated by the specific means, so that the user has a direct feedback to his actions. For example, the means for giving a feedback of the sorting order and/or the playback order can give an acoustical feedback like a beep or a speech signal. This is especially convenient if no optical feedback is available. Preferably, an optical feedback is given, e.g. by a display. In this case the feedback can be given in the form of a word or a short text, or by a symbol. Of course, other types of feedback are possible, e.g. by using different colours or by highlighting text elements. Advantageously the display displays information about at least two multimedia files of the plurality of multimedia files. In this case means are preferably provided for marking a currently selected multimedia file. Such a display already allows an efficient navigation within the plurality of multimedia files. However, it is likewise possible that the display displays information about only one multimedia file of the plurality of multimedia files.

Alternatively, the means for changing the sorting order and/or the playback order include two buttons for changing the order by running in opposite directions through a predefined sequence of properties of the currently selected or played back multimedia file. This has the advantage that by providing only one additional button the ease of operation is further increased. Especially if sorting is possible according to a large number of properties of the multimedia files, it is preferable to have the possibility to run through these properties in both directions. For example, if ten properties are available and the user wants to change from property #3 to property #1, it is more convenient to go to #1 via #2 instead of going to #1 via #4 to #10.

Preferably, the means for changing the sorting order and/or the playback order include a specific button for each property of the currently selected or played back multimedia file which is used for determining the order. This allows direct access to each sorting order, which is the most convenient solution. However, this solution is not feasible if the available space is too limited, e.g. because of the miniaturization of the device or because too many properties are available for sorting.

Advantageously, the properties of the multimedia files used for determining the sorting order and/or the playback order are user-definable. For example, the user might add descriptive information to his collection of photos indicating for each or at least some photos the persons or the locations depicted in the photos, the person who took the photos, the date etc.

Favourably, the properties of the multimedia files used for determining the order are included in the multimedia files. This has the advantage that the necessary properties are available to any device used for playback of the multimedia files. Alternatively, the properties of the multimedia files used for determining the order are stored in the device for playback of multimedia files. This is advantageous for file formats, which do not offer any possibility to add specific properties. For example, some formats may not allow to include a user weighting or rating. Other properties which may be used for sorting include the ID3-tags known from mp3-files (with artist, album, genre, release year), the creation date, the last access time, the number of accesses, or any other available metadata related to the multimedia files.

Preferably, a device for playback of multimedia files includes a user interface or performs a method according to the invention.

For a better understanding of the invention, an exemplary embodiment is specified in the following description with reference to the figures. Though the figures show a device capable of playback of audio files, the invention is also applicable to other types of multimedia devices. It is understood that the invention is not limited to this exemplary embodiment and that specified features can also expediently be combined and/or modified without departing from the scope of the present invention as defined by the appended claims.

Document XP002311032 discloses the graphical user interface of a software for editing and rendering multimedia files.

In the figures:
- Fig. 1: shows displays of two devices for playback of audio files;
- Fig. 2: shows a navigation menu according to the invention on a first type of display; and
- Fig. 3: shows a playback menu according to the invention on a second type of display.

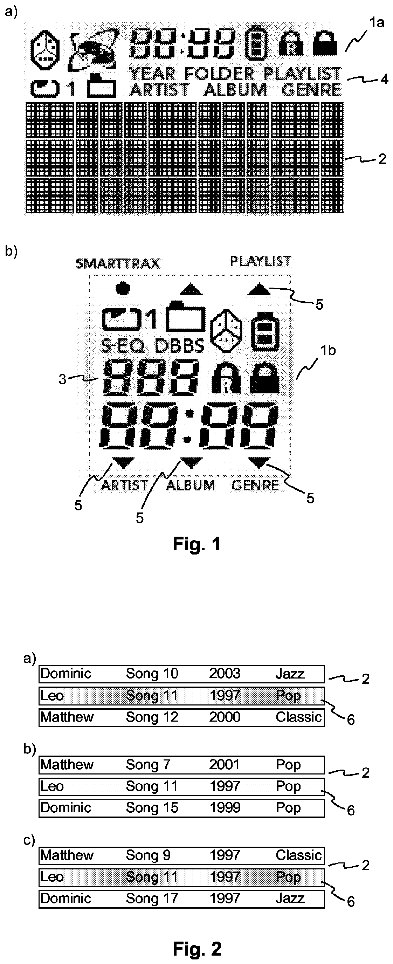

In Fig. 1a) a display 1a of a device for playback of audio files, e.g. a portable mp3-player, is shown. Besides a plurality of symbols and a numerical array for indicating the playing time of an audio file the display 1a includes a three-line text array 2, which is capable of displaying a certain amount of variable text. In addition, the display 1a has a special array 4 in which the sorting and/or playback order of the audio files is indicated, e.g. according to year, folder, artist, album, genre, or playlist. Of course, other properties of the files like the last access time, the number of accesses, the length, the creation date or even a personal weighting by the user etc. can also be used for sorting.

A more limited display 1b for a device for playback of audio files is depicted in Fig. 1b. Similar to the display described with reference to Fig. 1a, the display includes a numerical array for indicating the playing time of an audio file and a plurality of symbols. However, instead of the text array a further numerical array 3 is included for indicating the current file number. In addition, specific symbols 5 are provided for indicating the sorting and/or playback order. Due to the limited available space the symbols 5 are arrows pointing at descriptive words outside the display. Of course, with additional space available it is likewise possible to directly display the descriptive words instead of the symbols 5.

A navigation menu for a display 1a having a text array 2 is depicted in Fig. 2. In the example the text array has three lines. In each line an audio file is listed by indicating the artist, the title or the track number, the release year and the genre. Other information may also be listed. It is to be noted that the amount of listed information depends on the available space and, possibly, on the user preferences. Generally only some of the above information will be listed. In Fig. 2a) the audio files are sorted according to their title. One line 6 of the display is highlighted for indicating the currently selected file. By scrolling the list the user selects a specific audio file for playback. Scrolling the list can be performed in various ways, e.g. by changing the highlighted line 6 or by scrolling the text. In the first case in the beginning the top line is highlighted. When the user scrolls down, the highlighting is first shifted to the mid-line and then to the bottom line. Upon further scrolling down, while the highlighting is shifted back to the top-line, the next three audio files are displayed. In the second case always the mid-line (or any other fixed line) is highlighted. Upon scrolling the indicated audio files are shifted up or down according to the user request. Both methods allow to scroll to any desired audio file.

For easier navigation the device for playback of audio files has a special button (not shown) for re-sorting the audio files, a so-called 'arrange key'. By pressing this button the user changes the sorting order of the audio files. In Fig. 2b) such a re-sorting is shown. By pressing the button once the sorting order is changed to 'by genre', i.e. the audio files are now listed according to their genre. As can be seen in the figure, all three audio files indicated in the display belong to the same genre, e.g. Pop. The sorting order within the top-level sorting is device dependent. In the example, within the genre the audio files are still sorted according to their title. The new sorting is based on the properties of the selected audio file, i.e. the highlighted audio file. As can be seen the highlighted audio file is kept, only the remaining indicated files are changed. Since the highlighted audio file has the genre 'Pop' and the new sorting is according to the genre, the newly indicated audio files also have the genre 'Pop', provided files having this genre are available in the device for playback of audio files. By pressing the sorting button once again, the sorting order is changed from 'by genre' to 'by year'. This is depicted in Fig. 2c). Now all indicated audio files have the same release year. Again, the highlighted audio file is kept, only the other indicated audio files are updated. The sorting order within the release year again is according to the title. The re-sorting allows fast access to further audio files having a specific property. If the user has found an audio file by, for example, a specific artist, by simply pressing the sorting button a number of times he can find other audio files by the same artist, other audio files from the same album, or other audio files from the same year. There is no need to go back to the high-level menu to change the sorting order, which would mean that the user had to search for the previously selected audio file again. Navigation is, therefore, more convenient.

In the example only one button is provided for re-sorting the audio files. Pressing the button changes the sorting order in a predefined sequence, e.g. year → artist → album → genre. Of course, it is likewise possible to provide a specific button for each sorting order, or to provide two buttons for running through the predefined sequence in both directions, i.e. year ↔ artist ↔ album ↔ genre.

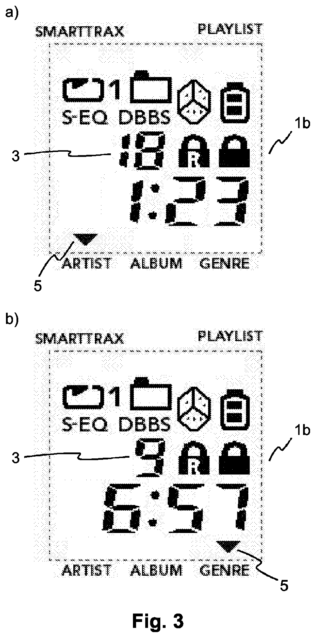

A similar concept applies to the playback order of the audio files. This concept is depicted in Fig. 3 for a display without text array. In this case no advanced navigation is necessary, since the available information cannot be displayed. However, the re-sorting can also be performed during playback. As depicted in Fig. 3a), the playback order of the audio files is 'by artist', as indicated by the symbol 5, and currently file number '18' is played back. If during playback the user decides that he wants to hear more audio files belonging to the same genre as the current audio file, he presses a specific button (not shown) for re-sorting the playback order, the so-called 'more from-key'. The playback order is changed to 'by genre', as indicated by the symbol 5 in Fig. 3b). Therefore, the next audio file, number '9' in the example, belongs to the same genre as the current audio file number '18'. By pressing the button a number of times, the playback order of the audio files is changed in a predefined sequence. Of course, the concept of changing the playback order at the touch of a button is also suitable for the above display 1a having a text array. In this case the 'arrange-key' and the 'more from-key' are advantageously the same buttons, since both features are on the one hand similar, but on the other hand not used at the same time. While the 'arrange-key' is used for navigation before playback, the 'more from-key' is only used during playback. Again, it is likewise possible to provide a specific button for each playback order, or to provide two buttons for running through the predefined sequence of playback orders in both directions.

## Claims

1. Device for playback of multimedia files, including means for changing the sorting order and/or the playback order of a plurality of multimedia files, wherein upon changing the sorting order and/or the playback order of the multimedia files the currently selected multimedia file is kept and the new sorting order and/or playback order is determined by at least one property of the currently selected multimedia file, **characterized in that**
the means for changing the sorting order and/or the playback order include a button, wherein the device is adapted so that each time the button is pressed the at least one property of the currently selected multimedia file for determining the new sorting order and/or playback order is changed by running through a predefined sequence of properties of the currently selected multimedia file.

2. Device according to claim 1, **further** including means (2, 3) for giving a feedback of the sorting order and/or the playback order.

3. Device according to claim 2, **wherein** the means (2, 3) for giving a feedback of the sorting order and/or the playback order give an acoustical feedback.

4. Device according to claim 2, **wherein** the means (2, 3) for giving a feedback of the sorting order and/or the playback order give an optical feedback.

5. Device according to claim 4, **wherein** the means (2, 3) for giving a feedback of the sorting order and/or the playback order include a display (2, 3).

6. Device according to claim 5, **wherein** the display (2, 3) displays information about at least one multimedia file of the plurality of multimedia files.

7. Device according to claim 5, **wherein** the display (2, 3) displays information about at least two multimedia files of the plurality of multimedia files, and wherein means (6) are provided for marking a currently selected multimedia file.

8. Device according to one of claims 1 to 7, **wherein** the means for changing the sorting order and the means for changing the playback order are the same.

9. Device according to one of claims 1 to 8, **wherein** the properties of the multimedia files used for determining the sorting order and/or the playback order are user-definable.

10. Device according to one of claims 1 to **9, wherein** the properties of the multimedia files used for determining the sorting order and/or the playback order are included in the multimedia files.

11. Device according to one of claims 1 to 10, **wherein** the properties of the multimedia files used for determining the sorting order and/or the playback order are stored in the device for playback of multimediafiles.

12. Device according to one of claims 1 to 11, **characterized in that** the properties of the audio files used for determining the order include at least one of artist, album, genre, release year, number of accesses, last access, creation date, length, and weighting.

## Patentansprüche

1. Vorrichtung für die Wiedergabe von Multimediadateien, wobei die Vorrichtung Mittel zum Ändern der Sortierreihenfolge und/oder der Wiedergabereihenfolge mehrerer Multimediadateien enthält, wobei beim Ändern der Sortierreihenfolge und/oder der Wiedergabereihenfolge der Multimediadateien die gegenwärtig ausgewählte Multimediadatei behalten wird und die neue Sortierreihenfolge und/oder Wiedergabereihenfolge durch mindestens eine Eigenschaft der gegenwärtig ausgewählten Multimediadatei bestimmt wird, **dadurch gekennzeichnet, dass**
die Mittel zum Ändern der Sortierreihenfolge und/oder der Wiedergabereihenfolge eine Schaltfläche enthalten, wobei die Vorrichtung so ausgelegt ist, dass jedes Mal, wenn die Schaltfläche gedrückt wird, die mindestens eine Eigenschaft der gegenwärtig ausgewählten Multimediadatei zum Bestimmen der neuen Sortierreihenfolge und/oder Wiedergabereihenfolge dadurch geändert wird, dass eine vorgegebene Folge von Eigenschaften der gegenwärtig ausgewählten Multimediadatei durchlaufen wird.

2. Vorrichtung nach Anspruch 1, die **ferner** Mittel (2, 3) enthält, um eine Rückkopplung der Sortierreihenfolge und/oder der Wiedergabereihenfolge zu geben.

3. Vorrichtung nach Anspruch 2, **wobei** die Mittel (2, 3), um eine Rückkopplung der Sortierreihenfolge und/oder der Wiedergabereihenfolge zu geben, eine akustische Rückkopplung geben.

4. Vorrichtung nach Anspruch 2, **wobei** die Mittel (2, 3), um eine Rückkopplung der Sortierreihenfolge und/oder der Wiedergabereihenfolge zu geben, eine optische Rückkopplung geben.

5. Vorrichtung nach Anspruch 4, **wobei** die Mittel (2, 3), um eine Rückkopplung der Sortierreihenfolge und/oder der Wiedergabereihenfolge zu geben, eine Anzeige (2, 3) enthalten.

6. Vorrichtung nach Anspruch 5, **wobei** die Anzeige (2, 3) Informationen über mindestens eine Multimediadatei der mehreren Multimediadateien anzeigt.

7. Vorrichtung nach Anspruch 5, **wobei** die Anzeige (2, 3) Informationen über mindestens zwei Multimediadateien der mehreren Multimediadateien anzeigt und wobei die Mittel (6) vorgesehen sind, um eine gegenwärtig ausgewählte Multimediadatei zu markieren.

8. Vorrichtung nach einem der Ansprüche 1 bis 7, **wobei** die Mittel zum Ändern der Sortierreihenfolge und die Mittel zum Ändern der Wiedergabereihenfolge dieselben sind.

9. Vorrichtung nach einem der Ansprüche 1 bis 8, **wobei** die zum Bestimmen der Sortierreihenfolge und/oder der Wiedergabereihenfolge verwendeten Eigenschaften der Multimediadateien durch den Nutzer definierbar sind.

10. Vorrichtung nach einem der Ansprüche 1 bis 9, **wobei** die zur Bestimmung der Sortierreihenfolge und/oder der Wiedergabereihenfolge verwendeten Eigenschaften der Multimediadateien in den Multimediadateien enthalten sind.

11. Vorrichtung nach einem der Ansprüche 1 bis 10, **wobei** die zur Bestimmung der Sortierreihenfolge und/oder der Wiedergabereihenfolge verwendeten Eigenschaften der Multimediadateien in der Vorrichtung für die Wiedergabe von Multimediadateien gespeichert sind.

12. Vorrichtung nach einem der Ansprüche 1 bis 11, **dadurch gekennzeichnet, dass** die zur Bestimmung der Reihenfolge verwendeten Eigenschaften der Audiodateien einen Künstler und/oder ein Album und/oder ein Genre und/oder ein Jahr der Veröffentlichung und/oder eine Anzahl der Zugriffe und/oder den letzten Zugriff und/oder das Datum der Erstellung und/oder die Länge und/oder die Gewichtung enthalten.

## Revendications

1. Dispositif de reproduction de fichiers audio, comprenant des moyens de modification de l'ordre de tri et/ou de l'ordre de reproduction d'une pluralité de fichiers audio, dans lequel sur modification de l'ordre de tri et/ou de l'ordre de reproduction des fichiers audio, le fichier audio actuellement sélectionné est conservé et le nouvel ordre de tri et/ou ordre de reproduction est déterminé à l'aide d'au moins une propriété du fichier audio actuellement sélectionné, **caractérisé en ce que** les moyens de changement de l'ordre de tri et/ou de l'ordre de reproduction comprennent un bouton, dans lequel le dispositif est adapté de sorte qu'à chaque fois que le bouton est pressé, la au moins une propriété du fichier audio actuellement sélectionné pour déterminer le nouvel ordre de tri et/ou le nouvel ordre de reproduction est modifiée en parcourant une séquence prédéfinie de propriétés du fichier audio actuellement sélectionné.

2. Dispositif selon la revendication 1, comprenant en outre des moyens (2, 3) pour donner un retour de l'ordre de tri et/ou de l'ordre de reproduction.

3. Dispositif selon la revendication 2, dans lequel les moyens (2, 3) pour donner un retour de l'ordre de tri et/ou de l'ordre de reproduction donnent un retour acoustique.

4. Dispositif selon la revendication 2, dans lequel les moyens (2, 3) pour donner un retour de l'ordre de tri et/ou de l'ordre de reproduction donnent un retour optique.

5. Dispositif selon la revendication 4, dans lequel les moyens (2, 3) pour donner un retour de l'ordre de tri et/ou de l'ordre de reproduction incluent un écran (2, 3).

6. Dispositif selon la revendication 5, dans lequel l'écran (2, 3) affiche des informations sur au moins un fichier audio d'une pluralité de fichiers audio.

7. Dispositif selon la revendication 5, dans lequel l'écran (2, 3) affiche des information sur au moins deux fichiers audio de la pluralité de fichiers audio, et dans lequel un moyen (6) est fourni pour marquer un fichier audio actuellement sélectionné.

8. Dispositif selon l'une des revendications 1 à 7, dans lequel les moyens pour changer l'ordre de tri et les moyens pour changer l'ordre de reproduction sont les mêmes.

9. Dispositif selon l'une des revendications 1 à 8, dans lequel les propriétés des fichiers audio utilisées pour déterminer l'ordre de tri et/ou l'ordre de reproduction peuvent être définies par l'utilisateur.

10. Dispositif selon l'une des revendications 1 à 9, dans lequel les propriétés des fichiers audio utilisées pour déterminer l'ordre de tri et/ou l'ordre de reproduction sont incluses dans les fichiers audio.

11. Dispositif selon l'une des revendications 1 à 10, dans lequel les propriétés des fichiers audio utilisées pour déterminer l'ordre de tri et/ou l'ordre de reproduction sont stockées dans le dispositif pour la reproduction de fichiers audio.

12. Dispositif selon l'une des revendications 1 à 11, **caractérisé en ce que** les propriétés des fichiers audio utilisées pour déterminer l'ordre incluent au moins un élément parmi l'artiste, l'album, le genre, l'année de sortie, le nombre de reproductions, la dernière reproduction, la date de création, la durée et la taille.
